# EUROPEAN PATENT APPLICATION

(11) **EP 1 787 901 A2**
(43) Date of publication of application: **23.05.2007**
(21) Application number: 06022229.6
(22) Date of filing: 24.10.2006
(51) Int. Cl.: B62M 3/00

(54) **Bicycle bottom bracket assembly**

(30) Priority: 28.10.2005 US 730828 P; 23.05.2006 US 438212
(71) Applicant: SHIMANO INC., Osaka 590-8577 (JP)
(72) Inventor: Kitagawa, Kozo, Sakai City Osaka 590-8577 (JP)
(74) Representative: Harrison, Robert John

(57) **Abstract**

A bicycle bottom bracket assembly has a crank axle (54) and a pair of bearing units (55,56) coupled thereto. The bearing units are configured to be mounted in a tubular hanger part or bottom bracket tube (40) of a bicycle frame. The crank axle has a central portion, a first axial end portion disposed on a first side of the central portion and a second axial end portion disposed on a second side of the central portion. Each of the bearing units (55,56) has an outer race, an inner race and a plurality of rolling members between the first outer and inner race. At least one of the bearing units has at least one drainage passage (P1) formed in the outer race.

## Description

### Field of the Invention

This invention generally relates to a bicycle crank axle bearing assembly. More specifically, the present invention relates to a bicycle crank axle bearing assembly that has a drain water feature for draining water from a tubular hanger part of a bicycle frame. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle crank axle bearing assembly.

Many different types of bottom bracket are currently available on the market. Generally speaking, a conventional bicycle bottom bracket assembly has a pair of bearings mounted into a bottom bracket shell or tubular hanger part of a bicycle frame for rotatably supporting a crank axle. Some bicycle bottom bracket assemblies are provided with a drain water feature for draining water from a tubular hanger part of a bicycle frame. One such conventional drain water feature for bicycle bottom bracket assembly includes providing a notch in a bottom bracket shell or tubular hanger part of a bicycle frame to drain any water that has intruded into the tubular hanger part of bottom bracket assembly.

In view of the above, it will be apparent to those skilled in the art from this disclosure that there exists a need for an improved bicycle bottom bracket assembly. This invention addresses this need in the art as well as other needs, which will become apparent to those skilled in the art from this disclosure.

### SUMMARY OF THE INVENTION

One object of the present invention is to provide a bicycle bottom bracket assembly that provides for drainage of the tubular hanger part of the bicycle frame.

Another object of the present invention is to provide a bicycle bottom bracket assembly that is relatively inexpensive to manufacture. The forgoing objects can basically be attained by providing a bicycle bottom bracket assembly that includes a crank axle, a first bearing unit and a second bearing unit. The crank axle has a central portion, a first axial end portion disposed on a first side of the central portion and a second axial end portion disposed on a second side of the central portion. The first bearing unit includes a first outer race, a first inner race and a plurality of first rolling members between the first outer and inner races with the first bearing unit disposed on the first axial end portion of the crank axle. The second bearing unit includes a second outer race, a second inner race and a plurality of second rolling members between the second outer and inner races with the second bearing unit disposed on the second axial end portion of the crank axle. The first bearing unit has a drainage passage formed in the first outer race.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is an overall right side elevational view of a bicycle with a bicycle bottom bracket assembly in accordance with a first embodiment of the present invention;

Figure 2 is an enlarged, partial perspective view of a hanger part of the bicycle frame of the bicycle illustrated Figure 1 with the bottom bracket installed in the hanger part in accordance with the first embodiment of the present invention;

Figure 3 is a transverse cross sectional view of the bottom bracket assembly in accordance with the first embodiment of the present invention;

Figure 4 is a partial enlarged side elevational view of a right side portion of the bottom bracket assembly in accordance with the first embodiment of the present invention; and

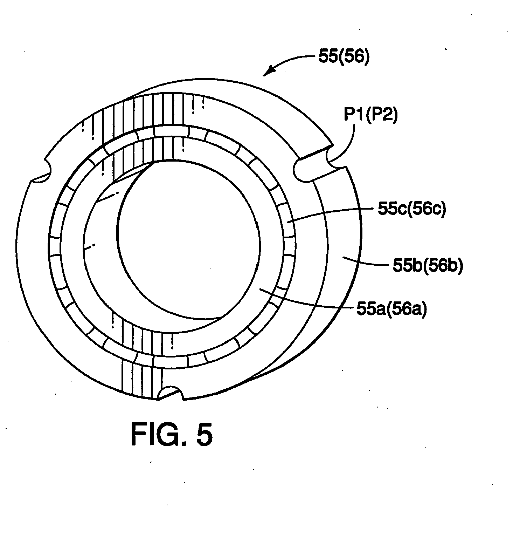

Figure 5 is enlarged side elevational view of one of the bearings used in the bottom bracket assembly in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

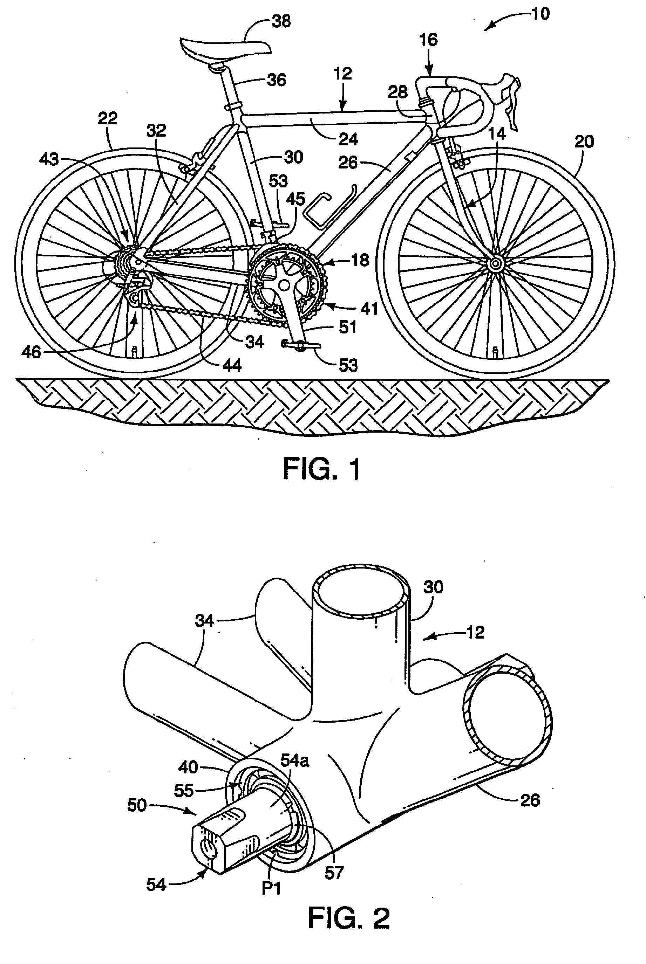

Referring initially to Figure 1, a bicycle 10 is illustrated that is equipped a first embodiment of the present invention. In this example, the bicycle 10 is a road bike that has a diamond-shaped frame 12 with a triangularly shaped front triangle and a triangularly shaped rear triangle that is arranged rearward of the front triangle. The frame 12 serves as the framework of the bicycle body. The frame 12 has a front fork 14 pivotally supported on a front part of the frame 12 such that the front fork 14 can rotate freely about an axis that is tilted slightly from vertical. The lower or bottom part of the front fork 14 is divided into two prongs. The bicycle 10 is also provided with a drop-type handlebar unit 16 connected to the front fork 14, and a drive unit 18 provided on a lower part of the frame 12. The drive unit 18 is configured to convert pedaling force into driving force. A front wheel 20 is supported in a freely rotatable manner on the bottom end of the front fork 14, while a rear wheel 22 is supported in a freely rotatable manner on a rear part of the frame 12. Of course, the bicycle 10 can include other components as needed and/or desired.

The frame 12 is basically formed by a top tube 24, a down tube 26, a head tube 28, a seat tube 30, a pair of seat stays 32 and a pair of chain stays 34. The top tube 24 is arranged generally horizontally, while the down tube 26 is arranged below the top tube 24 such that it slants obliquely upward toward the front. The head tube 28 joins the front ends of the top tube 24 and the down tube 26 together. The seat tube 30 extends diagonally upward and joins the rear ends of the top tube 24 and the down tube 26 together.

The bicycle 10 is also provided with a seat post 36 has a saddle 38 fastened thereto. The seat post 36 is secured in the seat tube 30 such that its position can be vertically adjusted up and down. A cylindrical or tubular hanger part 40 (shown in Figure 2) is formed at a connection portion where the seat tube 30 and the down tube 26 are joined together.

The drive unit 18 basically includes a front crankset 41, a rear gear cassette unit 43, a chain 44, a front derailleur 45, and a rear derailleur 46. The front crankset 41 is provided on the bottom bracket of the bicycle 10. The rear gear cassette unit 43 is mounted in a non-rotatable manner to the free hub of the rear wheel 22. The chain 44 is arranged on the front crankset 41 and the rear gear cassette unit 43 so as to span therebetween. The front derailleur 45 and the rear derailleur 46 function as gear changing devices.

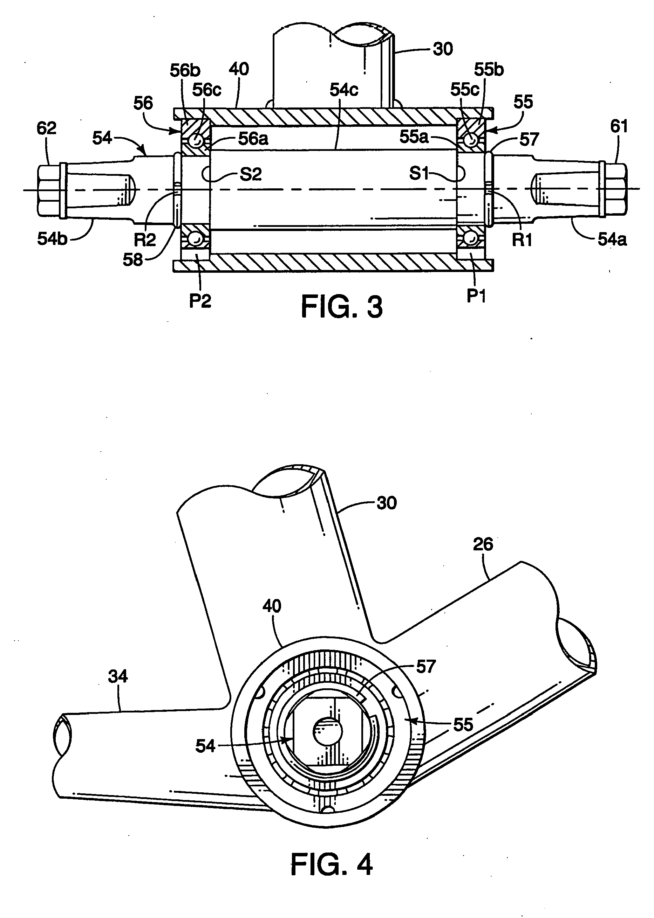

As shown in Figures 2 and 3, the front crankset 41 basically includes a crank axle assembly or bottom bracket assembly 50, a right crank arm 51, a left crank arm 52, and a pair of pedals 53 (Figure 1). The bottom bracket assembly 50 preferably has a crank axle 54 rotatably supported on the hanger part 40 of the frame 12 by a pair (left and right) of bearing unit 55 and 56 that are retained on the crank axle 54 by a pair of C-shaped retaining clips 57 and 58, respectively.

The right and left crank arm 51 and 52 are preferably fixedly coupled to the right and left ends of the crank axle 54 by a pair (left and right) of bolts 61 and 62, respectively. Of course, the right and left ends of the crank axle 54 can have other configurations for mounting the right and left crank arm 51 and 52 thereto as need and/or desired.

The crank axle 54 is preferably a rod shaped member that is highly rigid such as chrome molybdenum steel. The crank axle 54 can be either a solid member or a hollow pipe-shaped as need and/or desired. The crank axle 54 has a first axial end portion 54a, a second axial end portion 54b and a central portion 54c. The first axial end portion 54a is disposed on a first axial side of the central portion 54c, while the second axial end portion 54b is disposed on a second axial side of the central portion 54c. The central portion 54c has a larger transverse width than the first and second end portions 54a and 54b such that first and second axially facing abutment surfaces S1 and S2 are formed between the central portion 54c and the first and second end portions 54a and 54b, respectively. The first and second axially facing abutment surfaces S1 and S2 are configured and arranged to limit inward axial movement of the first and second bearing units 55 and 56 when they are installed onto the first and second end portions 54a and 54b, respectively, of the crank axle 54. In the illustrated embodiment, the right and left end portions of the crank axle 54 has threaded bore for threadedly receiving the bolts 61 and 62 to secure the right and left crank arm 51 and 52.

The first axial end portion 54a has a first annular groove or recess R1 for receiving the C-shaped retaining clip 57. When the first retaining clip 57 is disposed in the first recess R1, the first bearing unit 55 is retained on the first axial end portion 54a of the crank axle 54 by the first retaining clip 57. The second axial end portion 54b has a second annular groove or recess R2 for receiving the C-shaped retaining clip 58. When the second retaining clip 58 is disposed in the second recess R2, the second bearing unit 56 is retained on the second axial end portion 54b of the crank axle 54 by the second retaining clip 58. Thus, the first bearing unit 55 is disposed on the first axial end portion 54a of the crank axle 54 at a location axially inward of the first recess R1, while the second bearing unit 56 is disposed on the second axial end portion 54b of the crank axle 54 at a location axially inward of the second recess R2. Preferably, the first and second retaining clips 57 and 58 are C-shaped, split retaining rings that are constructed of a metallic material.

The bearing units 55 and 56 include inner rings or races 55a and 56a and outer rings or races 55b and 56b with a plurality of rolling members (i.e. ball bearings) 55c and 56c disposed therebetween. In this embodiment, the left bearing unit 55 constitutes a first bearing unit and the right bearing unit 56 constitutes a second bearing unit. The first and second bearing units 55 and 56 have axial lengths that are substantially equal to an axial distance measured between the first and second axially facing abutment surfaces S1 and S2 and the first and second retaining clips 57 and 58 such that the bearing units 55 and 56 are prevented from axially moving along the crank axle 54. The outer circumferential surfaces of the outer races 55b and 56b are provided with a plurality of drainage passages or trenches P1 and P2, respectively. These drainage passages P1 and P2 are configured and arranged relative to the tubular hanger part 40 to drain water within the tubular hanger part 40. The drainage passages P1 and P2 are preferably axially extending grooves that are formed in an outer circumferential surface of the outer races 55b and 56b with the grooves extending from an outwardly facing edge surface of the outer races 55b and 56b to an inwardly facing edge surface of the outer races 55b and 56b. While three drainage passages P1 and P2 are illustrated it will be apparent to those skilled in the bicycle art that only one drainage passage is needed for this feature of the present invention. Thus, it will be apparent to those skilled in the bicycle art that fewer or more than three drainage passages can be provided in the outer races 55b and 56b. Preferably, such one or more drainage passages are provided in the outer races 55a and 55b so that at least one drainage passage is positioned at or near the lowermost (i.e. most downward) part when the bearing units 55 and 56 are mounted into the hanger part 40.

The bearing units 55 and 56 are preferably sealed industrial bearings where seals are mounted between the inner rings 55a and 56a and the outer rings 55b and 56b, respectively, and grease is inserted in the bearing units 55 and 56 in advance. Therefore, maintenance of the bearing units 55 and 56 for lubrication can be omitted.

When the bottom bracket assembly 50 of the present invention as described above is mounted on the hanger part 40, first, one of the bearing units 55 and 56 is mounted on the crank axle 54 using one of the retaining clips 57 and 58. In this state, the end of the crank axle 54 that is free of a bearing is press-fitted into the one end of the hanger part 40. Then, the other one of the bearing units 55 and 56 is mounted on the other end of the crank axle 54 so as to be seated in the other end of the hanger part 40. Finally, the other one of the retaining clips 57 and 58 is installed on the crank axle 54 to complete the installation of the bottom bracket assembly 50.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least±5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle bottom bracket assembly comprising:
a crank axle having a central portion, a first axial end portion disposed on a first side of the central portion and a second axial end portion disposed on a second side of the central portion;
a first bearing unit including a first outer race, a first inner race and a plurality of first rolling members between the first outer and inner races with the first bearing unit disposed on the first axial end portion of the crank axle; and
a second bearing unit including a second outer race, a second inner race and a plurality of second rolling members between the second outer and inner races with the second bearing unit disposed on the second axial end portion of the crank axle,
at least one bearing unit having a drainage passage formed in the outer race.

2. The bicycle bottom bracket assembly according to claim 1, wherein
at least one bearing unit has a plurality of drainage passages formed in the outer race.

3. The bicycle bottom bracket assembly according to claim 1 or 2, wherein
the drainage passage is a groove formed in an outer circumferential surface of the outer race.

4. The bicycle bottom bracket assembly according to claim 3, wherein
the groove extends in an axial direction along the outer circumferential surface of the outer race.

5. The bicycle bottom bracket assembly according to claim 3 or 4, wherein
the groove extends from an outwardly facing edge surface of the outer race to an inwardly facing edge surface of the outer race.

6. The bicycle bottom bracket assembly according to any one of claims 1 to 5, wherein
each bearing unit has a drainage passage formed in the respective outer race.

7. The bicycle bottom bracket assembly according to claim 6, wherein
each of the first and second bearing units has a plurality of drainage passages formed in the first and second outer races, respectively.

8. The bicycle bottom bracket assembly according to claim 6 or 7, wherein
each of the drainage passages is a groove formed in an outer circumferential surface of a corresponding one of the first and second outer races.

9. The bicycle bottom bracket assembly according to claim 8, wherein
the grooves extend in an axial direction along the outer circumferential surfaces of the first and second outer races.

10. The bicycle bottom bracket assembly according to claim 8 or 9, wherein
the grooves extend from an outwardly facing edge surface of a corresponding one of the first and second outer races to an inwardly facing edge surface of the corresponding one of the first and second outer races.
